# EUROPEAN PATENT APPLICATION

(11) **EP 4 818 772 A1**
(43) Date of publication of application: **07.10.2026**
(21) Application number: 24897067.5
(22) Date of filing: 27.09.2024
(51) Int. Cl.: G02B 5/30, G02B 27/28, G02F 1/31

(54) **WAVEPLATE, WAVELENGTH SELECTION SWITCH, OPTICAL BRANCH INSERTION DEVICE, AND METHOD FOR MANUFACTURING WAVEPLATE**

(30) Priority: 30.11.2023 JP 2023202449
(71) Applicant: Dexerials Corporation, Shimotsuke-shi, Tochigi 323-0194 (JP)
(72) Inventor: SUZUKI Yuta, Shimotsuke-shi, Tochigi 323-0194 (JP); SHIBUYA Kazuyuki, Shimotsuke-shi, Tochigi 323-0194 (JP); SASAKI Koji, Shimotsuke-shi, Tochigi 323-0194 (JP)
(74) Representative: Müller-Boré & Partner Patentanwälte PartG mbB
(86) International application number: PCT/JP2024/034644
(87) International publication number: WO 2025/115377

(57) **Abstract**

Provided is a waveplate comprising: a transparent substrate; a pattern layer that is patterned on the transparent substrate; and a cured resin layer that is formed in a region on the transparent substrate where the pattern layer is not formed. The pattern layer has a retardation film. When the main refractive index of the retardation film is Nx, Ny, and the refractive index of the cured resin layer is Nr, formula Nx > Nr > Ny is satisfied.

## Description

### TECHNICAL FIELD

The present invention relates to a wave plate, a wavelength selective switch, an optical add-drop multiplexer, and a method for manufacturing a wave plate.

### BACKGROUND ART

In recent years, traffic in data centers and mobile networks has rapidly increased, and high speed, large capacity, long distance, and reliability have become essential in optical trunk networks supporting them. In order to meet these requirements, a wavelength division multiplexing (WDM) signal is used in optical communication, and a plurality of optical signals can be transmitted by one optical fiber, and as a result, it is possible to increase the capacity of communication without adding an optical fiber. However, there is an issue that reconstructing the configuration of the optical trunk network requires significant costs, and an optical add-drop multiple, and therefore a reconfigurable optical add-drop multiplexer (ROADM) has been developed (for example, see Non-Patent Document 1). The ROADM can remotely select and switch an optimal transmission path of a WDM signal, and is used in optical communication as a technology capable of flexibly reconstructing an optical trunk network. As a key device in the ROADM, a wavelength selective switch (WSS) is exemplified, which has functions of multiplexing and demultiplexing optical signals of different wavelengths and switching paths of the optical signals.

The WSS has, for example, a mechanism in which light incident from an input port is incident on LCOS (liquid crystal on silicon) as a switching element (light beam deflecting element) via a plurality of optical elements, the phase of the incident light is modulated by the LCOS, and the modulated light is incident on any output port. Here, the LCOS that modulates the phase of the incident light has polarization dependency that operates only in a polarized wave of a specific direction, and it is necessary to input polarized light that can be modulated by the LCOS. Therefore, the WSS requires a configuration for compensating the polarization state. The WSS includes, for example, a polarization beam splitter that separates incident light from the port array into two linearly polarized lights orthogonal to each other, a wave plate that rotates the direction of one of the linearly polarized lights separated by 90°, and a switching element (light beam polarization element) that modulates the phase of the incident light and makes it incident on any output port.

In contrast, Patent Document 1 discloses a 1/2 wave plate including a transparent substrate, an optically anisotropic layer containing a birefringent film, and a protective layer which is an atomic layer deposited layer of inorganic compound contacting the optically anisotropic layer.

### Citation List

### Patent Documents

Patent Document 1: Japanese Unexamined Patent Application Publication No. 2020-12876

### Non-Patent Documents

Non-Patent Document 1: Yuzo Ishii, Naoki Ooba, Akio Sahara, Koichi Hadama, WSS Module Technology for Enhancing the Functionality of ROADM, NTT Technical Journal, November 2013, pages 21-24

### DISCLOSURE OF THE INVENTION

### Problems to be Solved by the Invention

Here, in order to apply the 1/2 wave plate disclosed in Patent Document 1 to a wavelength selective switch, it is possible to consider patterning the optically anisotropic layer. It is desirable to adjust and reduce the optical path difference between transmitted light that has passed through a region where the optically anisotropic layer is formed and transmitted light that has passed through a region where the optically anisotropic layer is not formed. At this time, in order to correct the optical path difference, it is conceivable to insert another optical element, but adding a new component causes an increase in cost.

An object of the present invention is to provide a wave plate capable of adjusting an optical path difference between transmitted light that has passed through a region where a patterned layer is formed and transmitted light that has passed through a region where no patterned layer is formed.

### Means for Solving the Problems

(1) A wave plate includes: a transparent substrate; a patterned layer formed on the transparent substrate; and a cured resin layer formed in a region on the transparent substrate where no patterned layer is formed. The patterned layer includes a retardation film. The wave plate satisfies the relation: Nx > Nr > Ny, where main refractive indexes of the retardation film are Nx and Ny, and a refractive index of the cured resin layer is Nr.
(2) In the wave plate according to (1), a surface of the patterned layer is covered with a protective film.
(3) In the wave plate according to (1) or (2), the patterned layer further includes an anti-reflection film disposed between the retardation film and the transparent substrate.
(4) The wave plate according to any one of (1) to (3) further includes a second transparent substrate disposed on a side opposite to the transparent substrate with respect to the cured resin layer.
(5) The wave plate according to (4) further includes an anti-reflection film disposed between the cured resin layer and the second transparent substrate.
(6) A wavelength selective switch includes the wave plate according to any one of (1) to (5).
(7) An optical add-drop multiplexer includes the wavelength selective switch according to (6).
(8) A method for manufacturing the wave plate according to any one of (1) to (5) includes: forming a precursor of the patterned layer on the transparent substrate; laser processing the precursor of the patterned layer to form the patterned layer; and forming the cured resin layer in the region on the transparent substrate where no patterned layer is formed. The retardation film is formed when the precursor of the patterned layer is formed.
(9) In the method for manufacturing the wave plate according to (8), an anti-reflection film and the retardation film are sequentially formed when the precursor of the patterned layer is formed. The method further includes: disposing a second transparent substrate on a side opposite to the transparent substrate with respect to the cured resin layer; and forming an anti-reflection film between the cured resin layer and the second transparent substrate.

### Effects of the Invention

According to the present invention, it is possible to provide a wave plate capable of adjusting an optical path difference between transmitted light that has passed through a region where a patterned layer is formed and transmitted light that has passed through a region where no patterned layer is formed.

### BRIEF DESCRIPTION OF THE DRAWINGS

FIG. 1 is a cross-sectional view showing a wave plate according to an embodiment of the present invention;
FIG. 2 is a cross-sectional view illustrating a method for manufacturing the wave plate of FIG. 1;
FIG. 3 is a top view illustrating the method for manufacturing the wave plate of FIG. 1;
FIG. 4 is a cross-sectional view illustrating the method for manufacturing the wave plate of FIG. 1; and
FIG. 5 is a schematic diagram showing a part of a wavelength selective switch including the wave plate of FIG. 1.

### PREFERRED MODE FOR CARRYING OUT THE INVENTION

Hereinafter, embodiments of the present invention will be described with reference to the drawings.

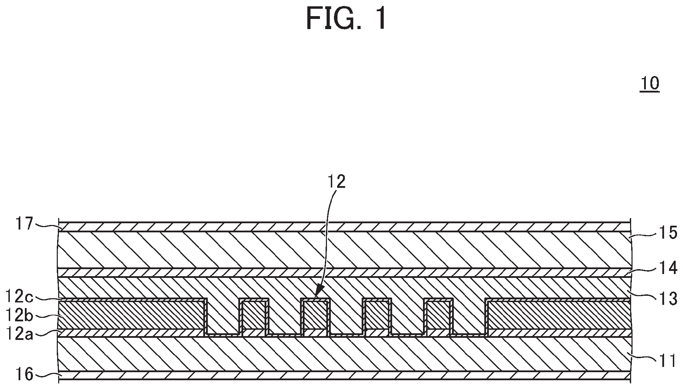

FIG. 1 shows a wave plate according to an embodiment of the present invention.

A wave plate 10 includes a transparent substrate 11, a patterned layer 12 formed on the transparent substrate 11, and a cured resin layer 13 formed in a region on the transparent substrate 11 where the patterned layer 12 is not formed. Here, the cured resin layer 13 is also formed on the patterned layer 12. In the patterned layer 12, an anti-reflection film 12a disposed on the transparent substrate 11 and a retardation film 12b are sequentially laminated, and the surface thereof is covered with a protective film 12c. Here, the surface of the region on the transparent substrate 11 where the patterned layer 12 is not formed is also covered with the protective film 12c. In the wave plate 10, on the cured resin layer 13, an anti-reflection film 14, and a transparent substrate 15 are sequentially laminated. In the wave plate 10, anti-reflection films 16 and 17 are respectively formed on the surfaces of the transparent substrates 11 and 15 on the sides not facing the anti-reflection films 12a and 14. This improves the light transmittance of the wave plate 10 in the used band.

In this case, when the main refractive indexes of the retardation film 12b are Nx and Ny, and the refractive index of the cured resin layer 13 is Nr, the relation$Nx > Nr > Ny$ is satisfied. Therefore, the wave plate 10 can adjust the optical path difference (hereinafter, referred to as the optical path difference) between the transmitted light that has passed through the region where the patterned layer 12 is formed and the transmitted light that has passed through the region where the patterned layer 12 is not formed.

For example, when Nx = 1.608, Ny = 1.492, Nr = 1.541, and the thickness of the retardation film 12b is 6 µm, the optical path difference in ordinary light corresponding to the slow axis (Nx axis) is $\left(1.608-1.541\right) \times 6 = 0.402 \left[μm\right]$ and the optical path difference in extraordinary light corresponding to the fast axis (Ny axis) is (1.541 - 1.492) × 6 = 0.294 [µm]. Therefore, the optical path difference between ordinary light and extraordinary light becomes small.

Here, in order to reduce the optical path difference between ordinary light and extraordinary light, preferably, the relation $\left[\left(Nx+Ny\right)/2\right] + 0.5 > Nr > \left[\left(Nx+Ny\right)/2\right] - 0.5$ is satisfied, and more preferably, the relation $\left[\left(Nx+Ny\right)/2\right] + 0.25 > Nr > \left[\left(Nx+Ny\right)/2\right] - 0.25$ is satisfied.

The birefringence (Nx - Ny) of the retardation film 12b is not particularly limited, but is, for example, 0.1 or more and 0.5 or less. The refractive index of the cured resin layer 13 is not particularly limited, but is, for example, 1.5 or more and 2.0 or less.

The retardation film 12b includes columnar portions and void portions provided between the columnar portions, and is formed by oblique evaporation of a dielectric material (for example, see Patent Document 1). The refractive index of the dielectric material is not particularly limited, but is, for example, 1.5 or more. The dielectric material is not particularly limited, and examples thereof include Ta₂O₅, TiO₂, SiO₂, Al₂O₃, NbO₅, and MaF₂, and two or more kinds thereof may be used in combination. Among these, Ta₂O₅ having a refractive index of 2.25 is preferable. Any retardation can be set by adjusting the film thickness of the retardation film 12b.

The protective film 12c suppresses penetration of moisture into the retardation film 12b and stabilizes optical characteristics. The material constituting the protective film 12c is not particularly limited, and examples thereof include a dielectric material such as SiO₂. The film thickness of the protective film 12c is not particularly limited, but is, for example, 30 nm or more and 3 µm or less. The method of forming the protective film 12c is not particularly limited, and examples thereof include chemical vapor deposition, plasma assisted deposition, and sputtering.

The shape of the pattern of the patterned layer 12 is set according to the application of the wave plate 10. For example, when the wave plate 10 is applied to a wavelength selective switch, the shape of the pattern of the patterned layer 12 is not particularly limited as long as it rotates the polarization direction of one polarization component separated from the incident light by 90° and does not change the polarization direction of the other polarization component.

The transparent substrates 11 and 15 are not particularly limited as long as the function as a wave plate can be maintained for light in the used band. The light transmittance of the transparent substrates 11 and 15 in the used band is, for example, 92% or more. The wavelength of the light in the used band is not particularly limited, but is, for example, 250 nm or more and 1700 nm or less. The light in the used band is preferably infrared light. The refractive index of the transparent substrates 11 and 15 is not particularly limited, but is, for example, 1.1 or more and 2.2 or less. The material constituting the transparent substrates 11 and 15 is not particularly limited, and examples thereof include glass such as quartz glass and white plate glass. The average thickness of the transparent substrates 11 and 15 is not particularly limited, but is, for example, 0.1 mm or more and 1.0 mm.

The cured resin constituting the cured resin layer 13 is a material transparent to the above-described wavelength of light in the used band, and preferably has a refractive index equal to that of the transparent substrates 11 and 15. The cured resin layer 13 is formed by curing, for example, a photocurable resin or a thermosetting resin. This improves the mechanical properties of the retardation film 12b. An example of a commercially available ultraviolet curable resin is an optical adhesive NOA61 (manufactured by Norland), in which the refractive index of the cured product is 1.56 (typical value).

The anti-reflection films 12a, 14, 16, and 17 are formed by alternately laminating two types of dielectric materials having different refractive indexes, for example. The dielectric materials are not particularly limited, and examples thereof include TiO₂, SiO₂, Ta₂O₅, Al₂O₃, CeO₂, ZrO₂, ZrO, Nb₂O₅, and HfO₂. Among these, a combination of SiO₂ and Nb₂O₅ and a combination of TiO₂ and SiO₂ are preferable. The number of layers of each of the anti-reflection films 12a, 14, 16, and 17 is not particularly limited, but is, for example, 2 or more and 40 or less.

Next, a method for manufacturing the wave plate 10 will be described.

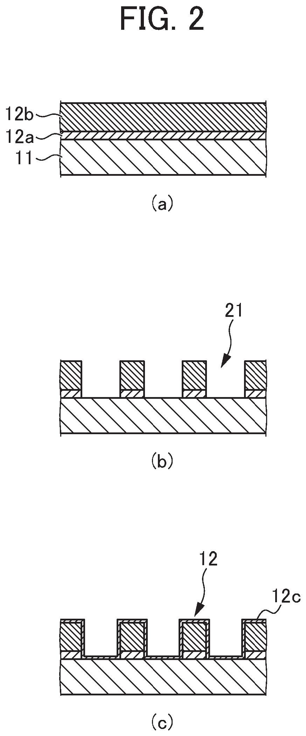

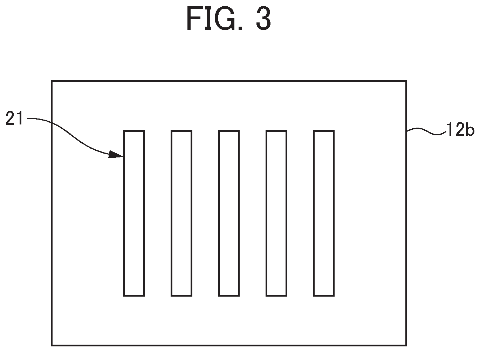

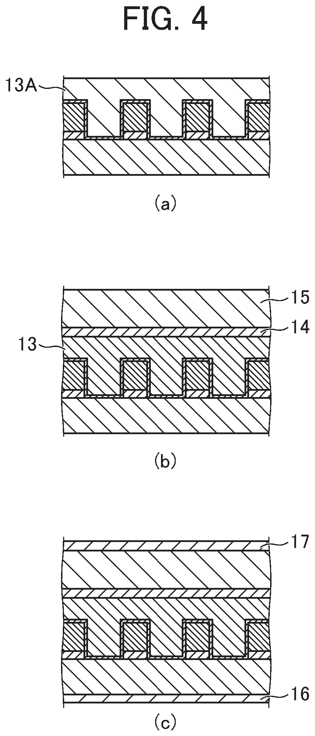

First, the transparent substrate 11 is cleaned, and then on the transparent substrate 11, the anti-reflection film 12a and the retardation film 12b as precursors of the patterned layer 12 are sequentially formed (see FIG. 2(a)). At this time, an annealing treatment may be performed at a temperature of 100°C or higher in order to evaporate moisture present in the void portions of the retardation film 12b. Next, the anti-reflection film 12a and the retardation film 12b are subjected to laser processing to form recesses 21 having a rectangular shape in top view, thereby forming a pattern of the anti-reflection film 12a and the retardation film 12b (see FIG. 2(b) and FIG. 3). At this time, since the degree of freedom of processing is high and the thermal influence on the workpiece is small, it is preferable to use an ultrashort pulse laser. Next, the protective film 12c is formed on the surfaces of the laser-processed anti-reflection film 12a and the retardation film 12b to form the patterned layer 12 (see FIG. 2(c)). This suppresses penetration of moisture into the void portions of the retardation film 12b. Next, the recesses 21 are filled with the photocurable resin or the thermosetting resin 13A (see FIG. 4(a)). Further, the transparent substrate 15 on which the anti-reflection film 14 is formed in advance is bonded to the photocurable resin or the thermosetting resin 13A, and then the photocurable resin or the thermosetting resin 13A is cured to form the cured resin layer 13 (see FIG. 4(b)). At this time, the thickness of the transparent substrates 11 and 15 may be adjusted by polishing the surfaces of the transparent substrates 11 and 15. Next, the anti-reflection films 16 and 17 are respectively formed on the surfaces of the transparent substrates 11 and 15 (see FIG. 4(c)).

Alternatively, after the recesses 21 are filled with the photocurable resin or the thermosetting resin 13A, the photocurable resin or the thermosetting resin 13A may be cured to form the cured resin layer 13 without bonding the transparent substrate 15 on which the anti-reflection film 14 is formed in advance. In this case, for example, after the anti-reflection film 14 is formed on the cured resin layer 13, it is bonded to the transparent substrate 15.

The wave plate 10 can be applied to, for example, a wavelength selective switch.

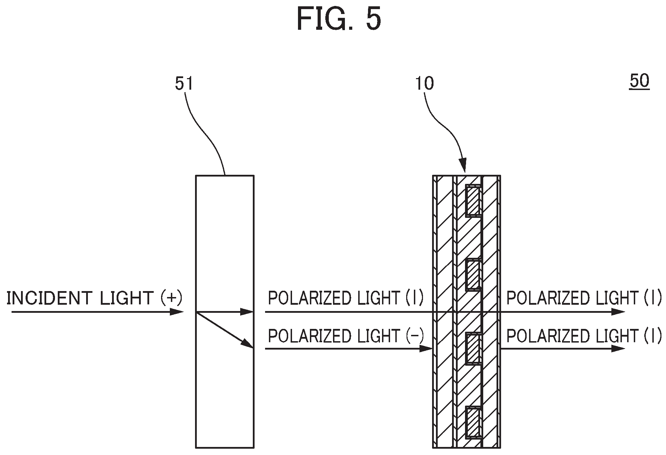

FIG. 5 shows a part of a wavelength selective switch including the wave plate 10.

A wavelength selective switch 50 includes a polarization beam splitter 51 that separates incident light from the optical port array into two linearly polarized lights orthogonal to each other, and the wave plate 10 that rotates the direction of one of the separated linearly polarized lights by 90° and converts the polarized light into polarized light that can be modulated by the LCOS. At this time, one of the linearly polarized lights separated by the polarization beam splitter 51 passes through the retardation film 12b, and the polarization direction thereof is rotated by 90°. On the other hand, since the other polarized light separated by the polarization beam splitter 51 does not pass through the retardation film 12b, the polarization direction does not change.

Note that the two orthogonal linearly polarized lights separated by the polarization beam splitter 51 mean polarized lights whose electric field oscillations are parallel and perpendicular to the plane of incidence, respectively. Polarized light whose electric field oscillations are parallel to the plane of incidence is defined as P-polarized light, and polarized light whose electric field oscillations are perpendicular to the plane of incidence is defined as S-polarized light. Here, the plane of incidence is a plane that is perpendicular to the reflecting plane and that contains the incident light beam and the reflected light beam.

The wavelength selective switch 50 can be applied to, for example, an optical add-drop multiplexer.

Although the embodiments of the present invention have been described above, the present invention is not limited to the above-described embodiments, and the above-described embodiments may be modified as appropriate within the scope of the gist of the present invention. For example, at least a part of the anti-reflection films 12a, 14, 16, and 17 and the protective film 12c may be omitted.

### EXPLANATION OF REFERENCE NUMERALS

10 wave plate
11, 15 transparent substrate
12 patterned layer
12a, 14, 16, and 17 anti-reflection film
12b retardation film
12c protective film
13 cured resin layer
13A photocurable resin or thermosetting resin
21 recess
50 wavelength selective switch
51 beam splitter

## Claims

1. A wave plate comprising:
a transparent substrate;
a patterned layer formed on the transparent substrate; and
a cured resin layer formed in a region on the transparent substrate where no patterned layer is formed,
the patterned layer comprising a retardation film, and
the wave plate satisfying the relation: Nx > Nr > Ny, wherein main refractive indexes of the retardation film are Nx and Ny, and a refractive index of the cured resin layer is Nr.

2. The wave plate according to claim 1, wherein a surface of the patterned layer is covered with a protective film.

3. The wave plate according to claim 1 or 2, wherein the patterned layer further comprises an anti-reflection film disposed between the retardation film and the transparent substrate.

4. The wave plate according to claim 1 or 2, further comprising a second transparent substrate disposed on a side opposite to the transparent substrate with respect to the cured resin layer.

5. The wave plate according to claim 4, further comprising an anti-reflection film disposed between the cured resin layer and the second transparent substrate.

6. A wavelength selective switch comprising the wave plate according to claim 1 or 2.

7. An optical add-drop multiplexer comprising the wavelength selective switch according to claim 6.

8. A method for manufacturing the wave plate according to claim 1 or 2, the method comprising:
forming a precursor of the patterned layer on the transparent substrate;
laser processing the precursor of the patterned layer to form the patterned layer; and
forming the cured resin layer in the region on the transparent substrate where no patterned layer is formed,
wherein the retardation film is formed when the precursor of the patterned layer is formed.

9. The method for manufacturing the wave plate according to claim 8,
wherein an anti-reflection film and the retardation film are sequentially formed when the precursor of the patterned layer is formed,
the method further comprising:
disposing a second transparent substrate on a side opposite to the transparent substrate with respect to the cured resin layer; and
forming an anti-reflection film between the cured resin layer and the second transparent substrate.
